# FASCICULE DE BREVET EUROPEEN

(11) **EP 4 392 291 B1**
(45) Date de publication et mention de la délivrance du brevet: **17.12.2025**
(21) Numéro de dépôt: 22744489.0
(22) Date de dépôt: 21.07.2022
(51) Int. Cl.: B60R 13/02, B60R 21/207, B60R 21/2338, B60R 21/231, B60N 2/42

(54) **SIÈGE DE VÉHICULE DOTÉ D'UN SYSTÈME DE SÉCURITÉ EMBARQUÉ**
FAHRZEUGSITZ MIT EINEM BORDSICHERHEITSSYSTEM
VEHICLE SEAT PROVIDED WITH AN ON-BOARD SAFETY SYSTEM

(30) Priorité: 26.08.2021 FR 2108953
(43) Date de publication de la demande: 03.07.2024
(73) Titulaire: Renault s.a.s, 92100 Boulogne Billancourt (FR); Nissan Motor Co., Ltd., Kanagawa, 221-0023 (JP)
(72) Inventeur: BEZEAULT, Loic, 78280 Guyancourt (FR); HEWAK, Gregor, 78280 Guyancourt (FR)
(74) Mandataire: Ipsilon
(86) Numéro de dépôt international: PCT/EP2022/070556
(87) Numéro de publication internationale: WO 2023/025483

(56) Documents cités:
- EP-A1- 3 527 440
- EP-A1- 3 718 834
- EP-A1- 3 868 613

## Description

L'invention se rapporte à un siège de véhicule doté d'un système de sécurité embarqué.

Afin de simplifier la rédaction, il est toujours supposé que le déploiement de l'airbag ne se produit que dans le cas d'un choc accidentel du véhicule contre un obstacle extérieur, pouvant par exemple être un autre véhicule. Il ne sera donc pas spécifié systématiquement que le déploiement de l'airbag n'intervient qu'après un choc du véhicule.

Afin de bien comprendre le positionnement des différentes pièces impliquées dans un siège selon l'invention, la description est réalisée en supposant que le siège est placé dans un véhicule et en faisant référence à un repère orthonormé direct XYZ lié audit véhicule et dans lequel X est un axe longitudinal avant-arrière du véhicule orienté vers l'arrière, Y est un axe transversal orienté vers la droite du véhicule et Z est un axe vertical dirigé vers le haut.

Actuellement, l'airbag frontal placé dans la planche de bord juste devant le siège passager est très contraignant car il occupe une place importante au sein de ladite planche de bord.

Une solution permettant de régler ce problème de place, consiste à transférer directement et totalement cet airbag dans le siège passager. Or, un tel transfert nécessite que le nouvel airbag placé dans ledit siège :
- présente des caractéristiques de protection au moins équivalentes à celles de l'ancien airbag passager placé dans la planche de bord,
- soit monté de façon précise et rigoureuse dans le siège passager afin qu'il puisse se déployer de façon fluide dans la configuration souhaitée, sans qu'un élément déjà présent dans ledit siège n'entrave ou n'empêche le déploiement de ce nouvel airbag.

Certains sièges existants comportent déjà des airbags simples placés de chaque côté du siège en complément de celui disposé dans la planche de bord, avec donc une performance complémentaire à celle de l'airbag disposé dans la planche de bord. Or, ces airbags nécessitent d'avoir un positionnement du siège prédéterminé par rapport à la planche de bord, ce qui est une contrainte dans le cas de véhicules autonomes, pour lesquels les sièges des occupants passagers sont amenés à se déplacer ou à pivoter avec une grande amplitude.

Un siège selon l'invention comprend un airbag performant capable de protéger efficacement un individu qui serait assis sur ledit siège, et dont le montage spécifique au sein dudit siège permet un déploiement fluide et efficace dudit airbag.

Le document EP 3 868 613 A1 divulgue un siège de véhicule comprenant une structure de dossier, une structure d'assise et un airbag possédant deux composantes placées sur les côtés dudit siège de part et d'autre d'un individu qui serait assis sur celui-ci, en ce que chaque composante de l'airbag comprend un sac gonflable et au moins une sangle cousue sur ledit sac, ladite composante étant apte à se déployer vers l'avant du siège dans le cas d'un choc du véhicule, de sorte que lesdites composantes soient amenées à entourer complètement l'individu, ladite au moins une sangle de chaque composante présente un point de fixation haut à une zone supérieure de la structure de dossier et un point de fixation bas à la structure d'assise, et ladite au moins une sangle de chaque composante passe le long d'un côté de la structure de dossier et le long d'un côté de la structure d'assise .

L'invention a pour objet un siège de véhicule comprenant une structure de dossier, une structure d'assise possédant une bosse anti sous-marinage, et un airbag possédant deux composantes placées sur les côtés dudit siège de part et d'autre d'un individu qui serait assis sur celui-ci.

Selon l'invention :
- chaque composante de l'airbag comprend un sac gonflable et au moins une sangle cousue sur ledit sac, ladite composante étant apte à se déployer vers l'avant du siège dans le cas d'un choc du véhicule, de sorte que lesdites composantes soient amenées à entourer complètement l'individu,
- ladite au moins une sangle de chaque composante présente un point de fixation haut à une zone supérieure de la structure de dossier et un point de fixation bas à la bosse anti sous-marinage de la structure d'assise, et ladite au moins une sangle de chaque composante passe le long d'un côté de la structure de dossier et le long d'un côté de la structure d'assise,
- la structure d'assise présente à chacun de ses côtés un carter interne et un carter externe ménageant entre eux un passage, ladite au moins une sangle de chaque composante de l'airbag étant insérée dans ledit passage, lesdits deux carters constituant des pistes de guidage pour permettre à ladite au moins une sangle et au sac gonflable de se déployer sur le siège dans le cas d'un choc du véhicule.

L'airbag mis en œuvre dans un siège selon l'invention comprend deux composantes disposées de part et d'autre d'un individu qui serait assis sur ledit siège, lesdites deux composantes étant amenées à se déployer chacune vers l'avant dans le cas d'un choc du véhicule pour venir entourer complètement cet individu. La particularité de cet airbag est que chacune de ses composantes comprend un sac gonflable et au moins une sangle cousue à ce sac, ladite au moins une sangle permettant :
- d'ancrer la composante de l'airbag dans le siège avec un point de fixation haut dans une zone supérieure du dossier et avec un point de fixation bas dans une bosse anti sous-marinage de l'assise,
- guider le déploiement du sac gonflable sur le siège afin que celui-ci assure une bonne protection de l'individu qui serait assis sur ledit siège.

Or, un tel airbag doit être monté avec un certain soin dans le siège, pour qu'il puisse être déployé efficacement autour d'un individu qui serait assis sur ledit siège. L'intégration de cet airbag dans un siège selon l'invention, passe par la création d'un passage sur les deux côtés de la structure d'assise au moyen de deux carters, et dans lequel viendrait se positionner ladite au moins une sangle de chaque composante de l'airbag. La mise en œuvre de ces deux carters, permet :
- de maintenir la sangle sur la structure d'assise dans un espace isolé n'interférant avec aucun autre élément de ladite structure d'assise,
- de créer une piste de déploiement orienté vers l'avant de la composante de l'airbag. En effet, quand le sac va commencer à se déployer, ladite au moins une sangle va sortir du passage crée entre le carter interne et le carter externe.

Le passage ménagé entre le carter interne et le carter externe est dimensionné au plus juste de façon à assurer l'insertion de la sangle en minimisant les jeux. Afin de bien comprendre l'orientation des passages crées de chaque côté de la structure d'assise et en supposant que le siège soit monté dans le véhicule, le carter interne et le carter externe :
- sont sensiblement parallèles et s'étendent chacun suivant un plan longitudinal et vertical XZ du véhicule,
- définissent entre eux un passage s'étendant suivant un plan longitudinal et vertical XZ du véhicule,
- sont montés sur chacun des deux bords parallèles de l'assise s'étendant suivant un axe longitudinal X et horizontal du véhicule.

Chaque carter externe épouse étroitement la forme du carter interne de façon à créer entre eux un passage de largeur faible et constante.

Selon une caractéristique possible de l'invention, chaque composante de l'airbag comprend deux sangles qui, lorsque ladite composante est montée dans ledit siège, sont superposées. De cette manière, lorsque chaque composante de l'airbag est sollicitée lors d'un choc du véhicule, les deux sangles sortent du passage situé entre le carter interne et le carter externe avant de s'écarter l'une de l'autre pour permettre un déploiement maitrisé du sac gonflable vers l'avant, ledit déploiement étant guidé par les deux sangles de la composante concernée.

Selon une caractéristique possible de l'invention, les deux sangles superposées de chaque composante de l'airbag sont pliées à sensiblement 90° lors de leurs passages entre la structure de dossier et la structure d'assise. Cette pliure préalable est doublement nécessaire, car :
- le sens de déploiement choisi pour l'airbag dans le siège va annuler cette pliure pour que les sangles une fois déployées se retrouvent lisses,
- elle permet aux deux sangles superposées de suivre rigoureusement le trajet du dossier et de l'assise, qui sont généralement orientés à plus de 90° l'un de l'autre.

Autrement dit, si cette pliure de 90° n'était pas réalisée, le déploiement de l'airbag créerait une pliure qui pourrait être dommageable pour l'individu à protéger. Le terme « sensiblement 90° » signifie « 90° plus ou moins 10° ».

Selon une caractéristique possible de l'invention, le carter interne d'un côté de la structure d'assise présente un évidement dans lequel est placé un premier boitier spécifique pour loger un brin boucle d'une ceinture de sécurité. La présence de l'airbag ne doit pas supprimer des fonctions existantes du siège, notamment celle d'une ceinture de sécurité. Le carter interne a été conçu pour tenir compte de la présence de cette ceinture de sécurité. Les sangles de l'airbag passent à l'extérieur du brin boucle et n'interfèrent donc pas avec ledit brin boucle et ne risque donc pas de biaiser le fonctionnement de la ceinture de sécurité.

Selon une caractéristique possible de l'invention, le carter interne de l'autre côté de la structure d'assise présente un évidement dans lequel est placé un deuxième boitier spécifique pour loger un ancrage de la ceinture de sécurité. Le carter interne a été conçu pour tenir compte de la présence de cette ceinture de sécurité. Les sangles de l'airbag passent à l'extérieur de l'ancrage de la ceinture de sécurité et n'interfèrent pas avec ledit ancrage et ne risque donc pas de biaiser le fonctionnement de la ceinture de sécurité.

Selon une caractéristique possible de l'invention, le dossier est réglable en inclinaison au moyen d'un mécanisme, une zone avant du carter externe d'un côté de la structure d'assise comportant une poignée de commande reliée audit mécanisme au moyen d'un fil et destinée à piloter ledit mécanisme. Comme les sangles d'une composante de l'airbag sont amenées à recouvrir le mécanisme d'inclinaison du dossier, il n'est plus possible de régler l'inclinaison du dossier directement au moyen d'une manipulation de ce mécanisme. Pour rendre ce réglage de l'inclinaison du dossier toujours possible, la poignée de commande de ce mécanisme a dû été déportée vers une zone avant du carter externe, afin qu'un individu assis sur le siège puisse manipuler aisément ladite poignée.

Selon une caractéristique possible de l'invention, le dossier est monté pivotant autour d'un axe de rotation, la double sangle de chaque composante de l'airbag étant placée dans l'alignement de cet axe de rotation. De cette manière, en passant dans l'alignement de cet axe de rotation, les deux sangles d'une composante de l'airbag ne vont pas empêcher le dossier d'être incliné.

Selon une caractéristique possible de l'invention, le carter externe comportant la poignée de commande de l'inclinaison du dossier comporte un bouton de commande destiné à activer électriquement un mécanisme de surélévation de la structure d'assise. Comme les sangles d'une composante de l'airbag sont amenées à interagir avec le mécanisme de surélévation de l'assise, ledit mécanisme a été électrifié de façon à faciliter le réglage de la surélévation de l'assise au moyen d'un simple bouton de commande.

Selon une caractéristique possible de l'invention, le carter interne et le carter externe de chaque côté de la structure d'assise sont réalisés en matière plastique. Ces carters ne vont pas alourdir de façon trop significative le siège, tout en permettant de guider efficacement le déploiement de l'airbag. Comme ces carters n'ont aucune fonction particulière lors d'une phase de roulage normale du véhicule, il n'est pas nécessaire de les renforcer inutilement.

Selon une caractéristique possible de l'invention, un fil rigide de renvoi d'angle est placé sur la structure d'assise en sortie du carter interne et du carter externe, la double sangle formant un coude autour de ce fil rigide de manière à avoir une trajectoire optimisée en amont dudit fil entre le carter interne et le carter externe. Ce fil rigide permet de positionner idéalement les deux sangles superposées d'une composante de l'airbag entre le carter interne et le carter externe d'un côté de l'assise, afin notamment que lesdites sangles s'étendent parallèlement au passage ménager entre ledit carter interne et ledit carter externe.

Un siège de véhicule selon l'invention présente l'avantage de posséder un airbag enveloppant destiné à remplacer efficacement un airbag passager rangé dans une planche de bord, sans avoir subi une restructuration en profondeur. En effet, un montage judicieux de l'airbag sur le siège au moyen d'un nombre de pièces restreint et de conception simple, suffit à rendre ledit siège particulièrement performant en matière de sécurité. Il en résulte qu'un siège selon l'invention peut directement et facilement être réalisé à partir d'un siège existant, sans nécessiter un temps de montage excessif et des modifications en profondeur dudit siège. Un siège selon l'invention a de plus l'avantage de pouvoir conserver tous ses réglages, tels que par exemple la hauteur de l'assise et l'inclinaison du dossier, malgré la présence d'un airbag performant, ainsi que des composantes de sécurité, telles que par exemple une ceinture de sécurité.

On donne ci-après une description détaillée d'un mode de réalisation préféré d'un siège selon l'invention, on se référant aux figures suivantes :
[Fig. 1] représente une vue en perspective d'un siège selon l'invention,
[Fig. 2] représente une vue en perspective d'un airbag d'un siège selon l'invention, dans une configuration déployée sur le siège,
[Fig. 3] représente une vue en perspective de la structure du siège de la figure 1,
[Fig. 4] représente une vue partielle en perspective d'une structure d'assise d'un siège selon l'invention,
[Fig. 5] représente une vue en perspective en éclaté d'un carter interne et d'un carter externe d'une structure d'assise d'un siège selon l'invention,
[Fig. 6] représente une vue partielle en perspective et sous un autre angle de la structure d'assise de la figure 4,
[Fig. 7] représente une vue partielle en perspective d'une structure d'assise d'un siège selon l'invention, montrant un fil de renvoi d'angle pour une sangle de l'airbag,
[Fig. 8] représente une vue de côté d'une structure d'assise d'un siège selon l'invention, comprenant une poignée de commande de l'inclinaison du dossier,
[Fig. 9] représente une vue en perspective en éclaté d'un dossier d'un siège selon l'invention,
[Fig. 10] représente une vue en perspective du dossier assemblé de la figure 9,
[Fig. 11] représente une vue en perspective d'une zone latérale d'un dossier d'un siège selon l'invention,

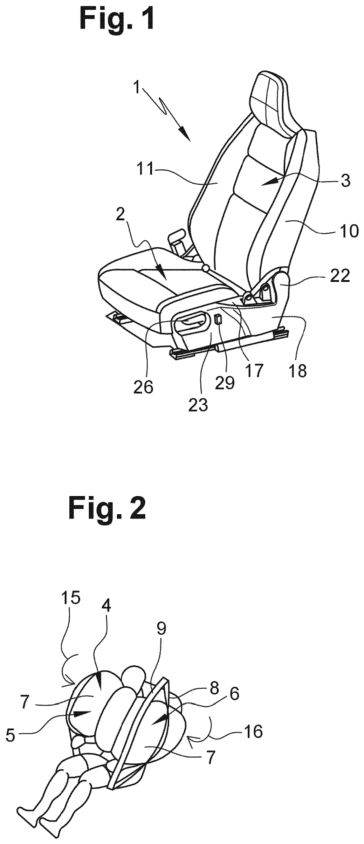

En se référant à la figure 1, un siège 1 selon l'invention est préférentiellement un siège passager comprenant classiquement une assise 2 dotée d'une structure et un dossier 3 également doté d'une structure.

En se référant à la figure 2, la particularité d'un tel siège 1 est qu'il intègre un airbag 4, destiné à remplacer l'airbag passager habituellement logé dans une planche de bord du véhicule, juste devant le siège passager. Schématiquement cet airbag 4 comprend deux composantes 5, 6 séparées, comportant chacune un sac gonflable 7 et deux sangles 8, 9 cousues à ce sac gonflable 7. Les deux composantes 5, 6 de cet airbag 4 sont rangées dans le siège 1, de chaque côté 10, 11 de celui-ci, de sorte qu'elles se retrouvent placées de part et d'autre d'un individu qui serait assis sur ledit siège 1. Autrement dit, ces deux composantes 5, 6 encadrent un individu qui serait assis sur ledit siège 1 et sont alignées suivant un axe transversal Y du véhicule dans lequel serait monté ledit siège 1. Ces deux composantes 5, 6 étant sensiblement identiques, nous ne décrirons pour la suite de la description, qu'une seule de ces composantes 5, 6.

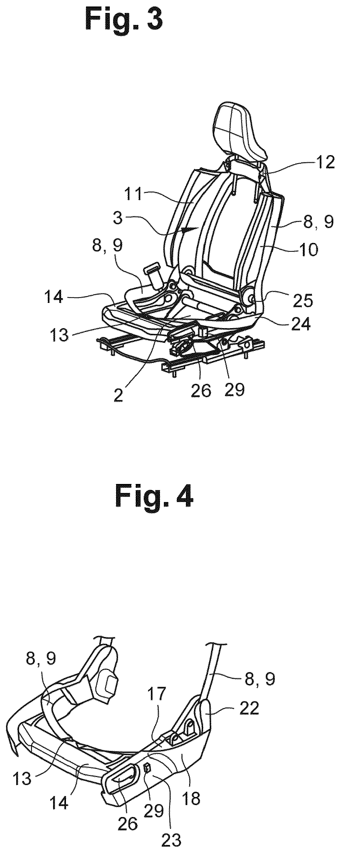

En se référant à la figure 3, lorsqu'une composante 5, 6 de l'airbag 4 est rangée dans le siège 1, les deux sangles 8, 9 sont superposées et comprennent un point de fixation haut à une zone supérieure 12 et centrale de la structure de dossier 3, ainsi qu'un point de fixation bas à une zone centrale 13 d'une bosse anti sous-marinage 14 de l'assise 2. Le sac gonflable 7 est inséré dans un côté du dossier 3, de façon à ne pas être visible depuis l'extérieur dudit siège 1. Les deux sangles superposées 8, 9 s'étendent entre leur point de fixation haut et leur point de fixation bas, en passant sur les côtés du dossier 3 et sur les côtés de l'assise 2 sans jamais être visibles depuis l'extérieur dudit siège 1.

En se référant à la figure 2, dans le cas d'un choc accidentel du véhicule contre un obstacle extérieur pouvant par exemple être un autre véhicule, les deux composantes 5, 6 de l'airbag 4 se déploient simultanément vers l'avant comme l'indiquent les deux flèches 15, 16 pour venir encercler complètement un individu qui serait assis sur le siège 1. En effet, lors de ce déploiement les deux sacs 7 gonflés des deux composantes 5, 6 viennent en continuité l'un de l'autre pour former un bourrelet de protection continu autour de l'individu. Le déploiement de chaque composante 5, 6 de l'airbag 4 est provoqué par le gonflement du sac 7 gonflable et est guidé par les deux sangles 8, 9 qui sont cousues audit sac 7 et qui sont fixées à la fois à la structure de dossier 6 et à la structure d'assise 2. Lorsqu'une composante 5, 6 de l'airbag 4 se déploie le point de fixation haut et le point de fixation bas des deux sangles 8, 9 demeurent inchangés, et continuent de retenir lesdites deux sangles 8, 9. Une fois que l'individu aura été complètement entouré par les deux sacs gonflables 7 des deux composantes 5, 6 de l'airbag 4, il sera parfaitement protégé dans toutes les directions de l'espace.

Afin que les deux composantes 5, 6 de l'airbag 4 puissent parfaitement jouer leur rôle de protection, il est important de bien les intégrer dans le siège 1, de manière à ce qu'elles puissent se déployer de façon fluide et efficace dans la direction souhaitée, et sans interférer avec d'autres éléments dudit siège. En effet, il ne faut pas que l'intégration des deux composantes 5, 6 de l'airbag 4 dans le siège 1 empêche par exemple le fonctionnement d'une ceinture de sécurité, ou que des éléments dudit siège 1 puissent nuire au déploiement desdites composantes 5, 6.

Un siège 1 selon l'invention possède une assise 2 spécialement configurée pour intégrer les deux composantes 5, 6 de l'airbag 4. La structure d'assise 2 est schématiquement délimitée par deux bords parallèles longitudinaux s'étendant suivant un axe longitudinal X du véhicule, et par deux bords parallèles transversaux s'étendant suivant un axe transversal Y dudit véhicule.

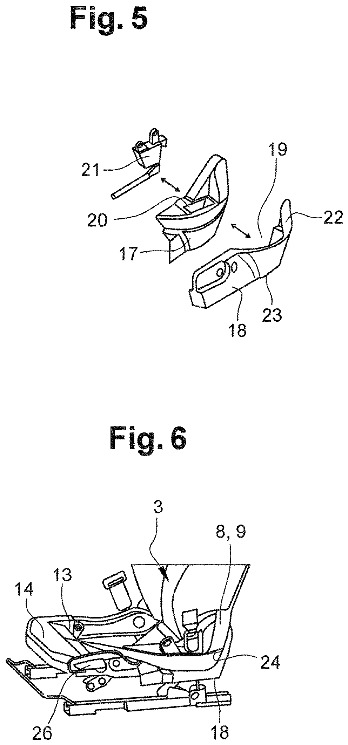

En se référant aux figures 4 et 5, chaque bord longitudinal de la structure d'assise 2 est matérialisé par un carter interne 17 et par un carter externe 18. Le carter interne 17 et le carter externe 18 sont des pièces de faible épaisseur s'inscrivant dans un plan sensiblement vertical et longitudinal XZ du véhicule. Suivant un axe transversal Y du véhicule, les deux carters externes 18 représentent les deux pièces les plus extérieures de l'assise 2, chaque carter interne 17 étant inséré entre un carter externe 18 et une zone centrale de l'assise 2 sur laquelle est destiné à venir s'asseoir un individu. Le carter externe 18 est allongé le long d'un axe longitudinal X du véhicule, et présente une zone creuse 19, le carter interne 17 ayant une longueur inférieure à celle du carter externe 18, la longueur étant sa dimension considérée le long d'un axe longitudinal X du véhicule. Le carter interne 17 présente une courbure et est destiné à venir au contact de la paroi du carter externe 18 délimitant la zone creuse 19.

En se référant aux figures 4 et 6, le carter interne 17 une fois qu'il a été plaqué contre une surface intérieure du carter externe 18, ménage avec ledit carter externe 18 un passage dans lequel passe les deux sangles superposées 8, 9 de la composante 5, 6 de l'airbag 4 correspondante. Le carter interne 17 comprend une ouverture 20 destinée à recevoir un boitier 21 spécifique pour loger, soit un brin de boucle de ceinture de sécurité, soit un ancrage de ladite ceinture de sécurité. De cette manière, les deux sangles 8, 9 superposées de l'airbag 4 en passant entre le carter interne 17 et le carter externe 18 sont extérieures audit brin de boucle de ceinture de sécurité et ne risquent donc pas d'interférer avec la ceinture de sécurité. De même, ladite ceinture de sécurité n'empêchera pas les deux sangles superposées 8, 9 de l'airbag 4 de se déployer lors d'un choc du véhicule contre un obstacle extérieur.

En se référant aux figures 1, 4, 5 et 8, le carter externe 18 présente un segment d'extrémité 22 s'étendant perpendiculairement à un corps principal 23 dudit carter, ledit segment d'extrémité 22 se retrouvant dans la continuité du dossier 3 et étant destiné à masquer les deux sangles superposées 8, 9 de l'airbag 4, entre ledit dossier 3 et l'assise 2 du siège 1.

Comme le montre les figures 3 et 6, entre le dossier 3 et l'assise 2, les deux sangles superposées 8, 9 de l'airbag 4 présente une pliure 24 à sensiblement 90°, c'est-à-dire à 90° plus ou moins 10°. Cette pliure préalable à 90° est nécessaire pour justement empêcher l'apparition d'une pliure qui pourrait s'avérer dangereuse lors du déploiement des deux sangles superposées 8, 9 de l'airbag 4. En effet, les conditions de déploiement des deux sangles superposées 8, 9 de l'airbag 4 dans le siège 1 sont telles que la pliure préalable de 90° va disparaitre, pour laisser place à des sangles 8, 9 d'airbag lisses et uniformes, et donc dépourvues de la moindre pliure, comme illustré à la figure 2.

En se référant à la figure 3, comme la plupart des dossiers des sièges de véhicule existants, le dossier 3 d'un siège 1 selon l'invention est réglable en inclinaison. Il est monté mobile en rotation autour d'un axe de rotation 25 s'étendant suivant un axe transversal Y du véhicule et placé dans une zone inférieure de la structure de dossier 3. Lors de leur passage sur les côtés du dossier 3 et sur les côtés de l'assise 2 les deux sangles superposées 8, 9 d'une composante 5, 6 de l'airbag 4 passe par cet axe de rotation 25. Autrement dit, si on prolongeait artificiellement ledit axe de rotation 25 de chaque côté, les deux sangles superposées 8, 9 de l'airbag 4 traverseraient les prolongements artificiels dudit axe de rotation 25. De cette manière, en passant par l'axe de rotation 25 du dossier 3, les deux sangles superposées 8, 9 de l'airbag 4 n'empêchent pas une mise en rotation dudit dossier 3 autour dudit axe 25 pour régler son inclinaison. En revanche, les deux sangles 8, 9 superposées de l'airbag 4 recouvrent un mécanisme de mise en rotation et de positionnement du dossier 3 habituellement placé dans le prolongement de l'axe de rotation 25 du dossier 3, empêchant toute manipulation de ce mécanisme.

En se référant aux figures 3, 4 et 8 afin de remédier à cet empêchement, un élément de commande 26 de ce mécanisme 27 a été créé, puis placé dans une zone avant de l'un des deux carters externes 18 de l'assise 2 du siège 1. Cet élément de commande est constitué par une poignée 26 s'étendant par défaut suivant un axe longitudinal X et horizontal du véhicule, ladite poignée 26 reliant le mécanisme 27 de mise en rotation et de positionnement du dossier 3 au moyen d'un fil 28. Ce fil 28 est caché par le carter externe 18, et une mise en rotation manuelle de la poignée de commande 26 exerce une tension sur le fil 28 qui agit directement sur le mécanisme 27 afin de pouvoir régler l'inclinaison du dossier 3.

De même, les deux sangles superposées 8, 9 de l'airbag 4 recouvrent un mécanisme de surélévation de l'assise 2 et empêchent tout réglage en hauteur de ladite assise 2.

En se référant aux figures 1, 3 et 4, ce problème d'accès au mécanisme de surélévation de l'assise 2 a été réglé en adjoignant à ce mécanisme un moteur électrique et en associant à ce moteur électrique un bouton de commande 29. Ce bouton de commande est un bouton poussoir 29 qui est fixé dans le carter externe 18 supportant la poignée 26 de commande, ledit bouton-poussoir 29 étant placé derrière ladite poignée 26.

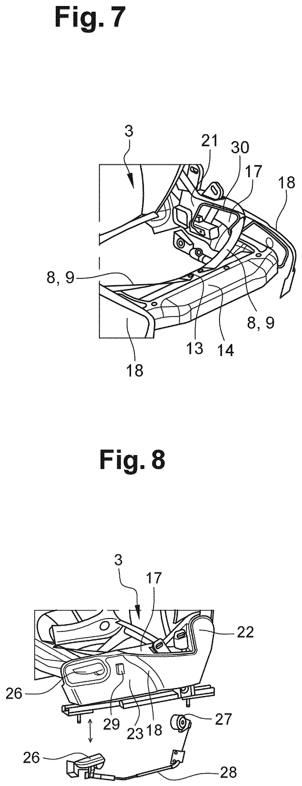

En se référant à la figure 7, un fil rigide 30 de renvoi d'angle est fixé à la structure d'assise 2 à l'intérieur d'un carter interne 17, de manière à améliorer le positionnement des deux sangles superposées 8, 9 de l'airbag 4 dans le passage situé entre le carter interne 17 et le carter externe 18. En effet, les deux sangles superposées 8, 9 de l'airbag 4 passent autour de ce fil rigide 30 en venant en appui contre celui-ci, pour former un coude, ledit fil rigide 30 redressant les deux sangles 8,9 superposées de l'airbag afin qu'elles s'insèrent de façon optimisée dans le passage créé entre le carter interne 17 et le carter externe 18. Autrement dit, ce fil rigide 30 prolonge la rectitude des deux sangles superposées 8, 9 de l'airbag 4 dans le passage situé entre le carter interne 17 et le carter externe 18.

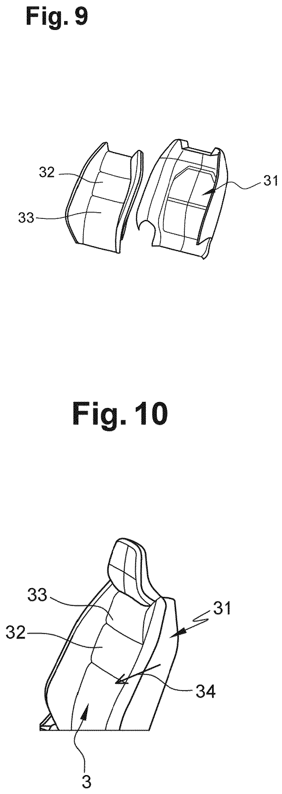

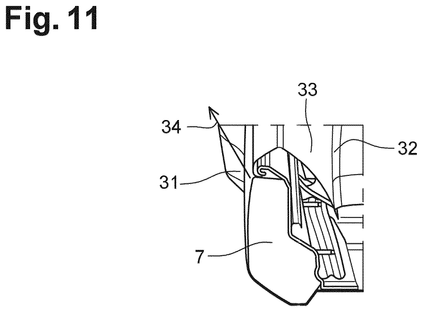

En se référant aux figures 9, 10 et 11, le sac gonflable 7 ainsi qu'un tronçon des sangles superposées 8, 9 cousues audit sac 7 sont rangés dans le dossier 3 du siège 1. Les habillages du dossier 3 ont été modifiés pour permettre de libérer rapidement les deux sangles superposées 8, 9 et le sac 7 dans la direction voulue : le déploiement doit se faire au plus vite vers l'avant du siège 1, pour englober le passager et éviter un contact avec la zone du pied milieu de la caisse du véhicule. Pour parvenir à ce résultat, une coque arrière rigide 31 recouvre une face arrière du dossier 3 ainsi que les deux côtés dudit dossier 3, en gardant une finition soignée avec une mousse 32 et un textile 33. L'interface entre la mousse 32, le textile 33 et la coque 31 est réalisée avec une pièce de la structure 34 du siège 1. Cette interface permet la libération des sangles superposées 8, 9 et du sac gonflable 7 et permet de concentrer le déploiement dudit sac 7 et desdites sangles 8, 9 vers l'avant comme indiqué par la flèche 34 sur les figures 10 et 11, pour éviter un déploiement transversal de ceux-ci. La coque 31 s'écarte sous l'effet de la pression produite par les gaz dans le sac 7. Les sangles superposées 8, 9 sont cousues sur un flanc extérieur du sac 7 et sont donc les premières à s'extraire du dossier 3, même si elles sont liées au sac 7.

## Revendications

1. Siège (1) de véhicule comprenant une structure de dossier (3), une structure d'assise (2) possédant une bosse anti sous-marinage (14), et un airbag (4) possédant deux composantes (5, 6) placées sur les côtés (10, 11) dudit siège (1) de part et d'autre d'un individu qui serait assis sur celui-ci, siège dans lequel:
- chaque composante (5, 6) de l'airbag (4) comprend un sac (7) gonflable et au moins une sangle (8, 9) cousue sur ledit sac (7), ladite composante (5, 6) étant apte à se déployer vers l'avant du siège dans le cas d'un choc du véhicule, de sorte que lesdites composantes (5, 6) soient amenées à entourer complètement l'individu,
- ladite au moins une sangle (8, 9) de chaque composante (5, 6) présente un point de fixation haut à une zone supérieure (12) de la structure de dossier (3) et un point de fixation bas à la bosse anti sous-marinage (13, 14) de la structure d'assise (2), et ladite au moins une sangle (8, 9) de chaque composante (5, 6) passe le long d'un côté de la structure de dossier (3) et le long d'un côté de la structure d'assise (2),
- la structure d'assise (2) présente à chacun de ses côtés un carter interne (17) et un carter externe (18) ménageant entre eux un passage, ladite au moins une sangle (8, 9) de chaque composante (5, 6) de l'airbag (4) étant insérée dans ledit passage, lesdits deux carters (17, 18) constituant des pistes de guidage pour permettre à ladite au moins une sangle (8, 9) et au sac gonflable (7) de se déployer sur le siège (1) dans le cas d'un choc du véhicule.

2. Siège de véhicule selon la revendication 1, **caractérisé en ce que** chaque composante (5, 6) de l'airbag (4) comprend deux sangles (8, 9) qui, lorsque ladite composante (5, 6) est montée dans ledit siège (1), sont superposées.

3. Siège de véhicule selon la revendication 2, **caractérisé en ce que** les deux sangles (8, 9) superposées de chaque composante (5, 6) de l'airbag (4) sont pliées à sensiblement 90°, lors de leurs passages entre la structure de dossier (3) et la structure d'assise (2).

4. Siège de véhicule selon l'une quelconque des revendications 2 ou 3, **caractérisé en ce que** le carter interne (17) d'un côté de la structure d'assise (2) présente un évidement (20) dans lequel est placé un premier boitier (21) spécifique pour loger un brin boucle d'une ceinture de sécurité.

5. Siège de véhicule selon la revendication 4, **caractérisé en ce que** le carter interne (17) de l'autre côté de la structure d'assise (2) présente un évidement (20) dans lequel est placé un deuxième boitier (21) spécifique pour loger un ancrage de la ceinture de sécurité.

6. Siège de véhicule selon l'une quelconque des revendications 2 à 5, **caractérisé en ce que** le dossier (3) est réglable en inclinaison au moyen d'un mécanisme (27), et **en ce qu'**une zone avant du carter externe (18) d'un côté de la structure d'assise (2) comporte une poignée de commande (26) reliée audit mécanisme (27) au moyen d'un fil (28) et destinée à piloter ledit mécanisme.

7. Siège de véhicule selon la revendication 6, **caractérisé en ce que** le dossier (3) est monté pivotant autour d'un axe de rotation (25), et **en ce que** la double sangle (8, 9) de chaque composante (5, 6) de l'airbag (4) est placée dans l'alignement de cet axe de rotation (25).

8. Siège de véhicule selon quelconque des revendications 6 ou 7, **caractérisé en ce que** le carter externe (18) comportant la poignée de commande (26) de l'inclinaison du dossier (3) comporte un bouton de commande (29) destiné à activer électriquement un mécanisme de surélévation de la structure d'assise (2).

9. Siège de véhicule selon l'une quelconque des revendications 2 à 8, **caractérisé en ce que** le carter interne (17) et le carter externe (18) de chaque côté de la structure d'assise (2) sont réalisés en matière plastique.

10. Siège de véhicule selon l'une quelconque des revendications 2 à 9, **caractérisé en ce qu'**un fil rigide (30) de renvoi d'angle est placé sur la structure d'assise (2) en sortie du carter interne (17) et du carter externe (18), et **en ce que** la double sangle (8, 9) forme un coude autour de ce fil rigide (30) de manière à avoir une trajectoire optimisée en amont dudit fil (30) entre le carter interne (17) et le carter externe (18).

## Patentansprüche

1. Fahrzeugsitz (1), umfassend eine Rückenlehnenstruktur (3), eine Sitzstruktur (2), die einen Durchrutsch-Schutzhöcker (14) besitzt, und einen Airbag (4), der zwei Komponenten (5, 6) besitzt, die an den Seiten (10, 11) des Sitzes (1) auf beiden Seiten einer Person, die darauf sitzen würde, platziert sind, wobei in dem Sitz:
- jede Komponente (5, 6) des Airbags (4) einen aufblasbaren Sack (7) und mindestens einen Gurt (8, 9), der an den Sack (7) genäht ist, umfasst, wobei die Komponente (5, 6) geeignet ist, um sich im Fall eines Aufpralls des Fahrzeugs in Richtung der Vorderseite des Sitzes zu entfalten, sodass die genannten Komponenten (5, 6) veranlasst werden, das Individuum vollständig zu umgeben,
- der mindestens eine Gurt (8, 9) jeder Komponente (5, 6) einen oberen Befestigungspunkt an einem oberen Bereich (12) der Rückenlehnenstruktur (3) und einen unteren Befestigungspunkt an dem Durchrutsch-Schutzhöcker (13, 14) der Sitzstruktur (2) aufweist, und der mindestens eine Gurt (8, 9) jeder Komponente (5, 6) entlang einer Seite der Rückenlehnenstruktur (3) und entlang einer Seite der Sitzstruktur (2) verläuft,
- die Sitzstruktur (2) an jeder ihrer Seiten ein inneres Gehäuse (17) und ein äußeres Gehäuse (18) aufweist, die untereinander einen Durchgang ausbilden, wobei der mindestens eine Gurt (8, 9) jeder Komponente (5, 6) des Airbags (4) in den Durchgang eingeführt ist, wobei die zwei Gehäuse (17, 18) Führungsbahnen darstellen, um es dem mindestens einen Gurt (8, 9) und dem Airbag (7) zu ermöglichen, sich im Fall eines Aufpralls des Fahrzeugs auf dem Sitz (1) zu entfalten.

2. Fahrzeugsitz nach Anspruch 1, **dadurch gekennzeichnet, dass** jede Komponente (5, 6) des Airbags (4) zwei Gurte (8, 9) umfasst, die, wenn die Komponente (5, 6) in dem Sitz (1) montiert ist, übereinander liegen.

3. Fahrzeugsitz nach Anspruch 2, **dadurch gekennzeichnet, dass** die zwei übereinander liegenden Gurte (8, 9) jeder Komponente (5, 6) des Airbags (4) im Wesentlichen um 90° gefaltet sind, wenn sie zwischen der Rückenlehnenstruktur (3) und der Sitzstruktur (2) verlaufen.

4. Fahrzeugsitz nach einem der Ansprüche 2 oder 3, **dadurch gekennzeichnet, dass** das innere Gehäuse (17) auf einer Seite der Sitzstruktur (2) eine Aussparung (20) aufweist, in der ein erstes Gehäuse (21) platziert ist, das spezifisch zum Aufnehmen eines Schlaufenstrangs eines Sicherheitsgurts ist.

5. Fahrzeugsitz nach Anspruch 4, **dadurch gekennzeichnet, dass** das innere Gehäuse (17) auf der anderen Seite der Sitzstruktur (2) eine Aussparung (20) aufweist, in der ein zweites Gehäuse (21) platziert ist, das spezifisch zum Aufnehmen einer Verankerung des Sicherheitsgurts ist.

6. Fahrzeugsitz nach einem der Ansprüche 2 bis 5, **dadurch gekennzeichnet, dass** die Neigung der Rückenlehne (3) mittels eines Mechanismus (27) verstellbar ist, und dass ein vorderer Bereich des äußeren Gehäuses (18) auf einer Seite der Sitzstruktur (2) einen Betätigungsgriff (26) umfasst, der mittels eines Drahts (28) mit dem Mechanismus (27) verbunden ist und dazu bestimmt ist, den Mechanismus zu steuern.

7. Fahrzeugsitz nach Anspruch 6, **dadurch gekennzeichnet, dass** die Rückenlehne (3) schwenkbar um eine Drehachse (25) montiert ist, und dass der doppelte Gurt (8, 9) jeder Komponente (5, 6) des Airbags (4) in der Ausrichtung dieser Drehachse (25) platziert ist.

8. Fahrzeugsitz nach einem der Ansprüche 6 oder 7, **dadurch gekennzeichnet, dass** das äußere Gehäuse (18), umfassend den Betätigungsgriff (26) für die Neigung der Rückenlehne (3), einen Steuerknopf (29) umfasst, der dazu bestimmt ist, elektrisch einen Mechanismus zum Erhöhen der Sitzstruktur (2) zu aktivieren.

9. Fahrzeugsitz nach einem der Ansprüche 2 bis 8, **dadurch gekennzeichnet, dass** das innere Gehäuse (17) und das äußere Gehäuse (18) auf jeder Seite der Sitzstruktur (2) aus Kunststoff gefertigt sind.

10. Fahrzeugsitz nach einem der Ansprüche 2 bis 9, **dadurch gekennzeichnet, dass** an dem Ausgang des inneren Gehäuses (17) und des äußeren Gehäuses (18) ein starrer Umlenkdraht (30) an der Sitzstruktur (2) angeordnet ist, und dass der doppelte Gurt (8, 9) einen Bogen um diesen starren Draht (30) bildet, um einen optimierten Weg stromaufwärts von dem Draht (30) zwischen dem inneren Gehäuse (17) und dem äußeren Gehäuse (18) aufzuweisen.

## Claims

1. A vehicle seat (1) comprising a backrest structure (3), a seat bottom structure (2) having an anti-submarining boss (14), and an airbag (4) having two components (5, 6) placed on the sides (10, 11) of said seat (1) on either side of an individual who would be seated thereon, in which seat:
- each component (5, 6) of the airbag (4) comprises an inflatable bag (7) and at least one strap (8, 9) sewn onto said bag (7), said component (5, 6) being able to deploy toward the front of the seat in the event of a vehicle impact, so that said components (5, 6) are caused to completely surround the individual,
- said at least one strap (8, 9) of each component (5, 6) has a high attachment point to an upper zone (12) of the backrest structure (3) and a low attachment point to the anti-submarining boss (13, 14) of the seat bottom structure (2), and said at least one strap (8, 9) of each component (5, 6) passes along one side of the backrest structure (3) and along one side of the seat bottom structure (2),
- the seat bottom structure (2) has, on each of its sides, an internal casing (17) and an external casing (18) providing a passage therebetween, said at least one strap (8, 9) of each component (5, 6) of the airbag (4) being inserted into said passage, said two casings (17, 18) constituting guide tracks to allow said at least one strap (8, 9) and the inflatable bag (7) to deploy on the seat (1) in the event of a vehicle impact.

2. The vehicle seat according to claim 1, **characterized in that** each component (5, 6) of the airbag (4) comprises two straps (8, 9) which, when said component (5, 6) is mounted in said seat (1), are superimposed.

3. The vehicle seat according to claim 2, **characterized in that** the two superimposed straps (8, 9) of each component (5, 6) of the airbag (4) are bent at substantially 90°, during their passages between the backrest structure (3) and the seat bottom structure (2).

4. The vehicle seat according to any one of claims 2 or 3, **characterized in that** the internal casing (17) on one side of the seat bottom structure (2) has a recess (20) in which is placed a specific first housing (21) to accommodate a buckle strand of a seat belt.

5. The vehicle seat according to claim 4, **characterized in that** the internal casing (17) on the other side of the seat bottom structure (2) has a recess (20) in which is placed a specific second housing (21) to accommodate an anchor of the seat belt.

6. The vehicle seat according to any one of claims 2 to 5, **characterized in that** the backrest (3) is adjustable in inclination by means of a mechanism (27), and **in that** a front zone of the external casing (18) on one side of the seat bottom structure (2) comprises a control handle (26) connected to said mechanism (27) by means of a wire (28) and intended to control said mechanism.

7. The vehicle seat according to claim 6, **characterized in that** the backrest (3) is pivotally mounted about an axis of rotation (25), and **in that** the double strap (8, 9) of each component (5, 6) of the airbag (4) is placed in alignment with this axis of rotation (25).

8. The vehicle seat according to any of claims 6 or 7, **characterized in that** the external casing (18) comprising the control handle (26) for the inclination of the backrest (3) comprises a control button (29) intended to electrically activate a mechanism for raising the seat bottom structure (2).

9. The vehicle seat according to any one of claims 2 to 8, **characterized in that** the internal casing (17) and the external casing (18) on each side of the seat bottom structure (2) are made of plastic material.

10. The vehicle seat according to any one of claims 2 to 9, **characterized in that** a rigid angle transmission wire (30) is placed on the seat bottom structure (2) at the outlet of the internal casing (17) and the external casing (18), and **in that** the double strap (8, 9) forms a bend around this rigid wire (30) so as to have an optimized trajectory upstream of said wire (30) between the internal casing (17) and the external casing (18).
